# EUROPEAN PATENT APPLICATION

(11) **EP 1 343 256 A1**
(43) Date of publication of application: **10.09.2003**
(21) Application number: 01270965.5
(22) Date of filing: 14.12.2001
(51) Int. Cl.: H04B 7/06

(54) **PORTABLE RADIO DEVICE HAVING ANTENNA SWITCHING FUNCTION**

(30) Priority: 15.12.2000 JP 2000382466
(71) Applicant: MATSUSHITA ELECTRIC INDUSTRIAL CO., LTD., Kadoma-shi, Osaka 571-0050 (JP)
(72) Inventor: NAKANISHI, Kiyoshi, Kawasaki-shi, Kanagawa 211-0053 (JP); TAN, Yasushi, Yokohama-shi, Kanagawa 240-0051 (JP); OHTA, Kazuhiko, Yokohama-shi, Kanagawa 240-0042 (JP)
(74) Representative: Grünecker, Kinkeldey, Stockmair & Schwanhäusser Anwaltssozietät
(86) International application number: JP0110999
(87) International publication number: WO02049238

(57) **Abstract**

The present invention provides portable radio apparatus that keeps a good transmitting quality. In the invention, a receiving antenna is determined at reception from among transmitting/receiving antennas(12) and (14) on a per transmitting slot basis by way of the space diversity(16). Then, a determined result BRNC is output to a controller (18). The controller (18) outputs a control signal to a logic circuit (20) based on the determination result BRNC. The logic circuit (20) outputs switching signals (SUB 1) and (SUB 2) corresponding to the control signal to an antenna switching section (24), which selects a transmitting antenna. It is possible to select an antenna whose receiving quality is better at reception as a transmitting antenna in the next transmitting slot. This keeps the transmitting quality better. Switching between transmitting antennas is made on a per transmitting slot basis. This assures quick adaptive switchover to an antenna having a good transmitting quality.

## Description

### Background of the Invention

### Field of the Invention

The present invention relates to portable radio apparatus having a plurality of antennas and in particular to a technology for switching between transmitting antennas.

### Description of the Related Art

A receive signal received by a cell phone 1 as a mobile telecommunication terminal has a variety of transmission paths depending on the reflection of radio waves on the landforms and buildings or other structures. This causes the phenomenon called fading that the phase and amplitude of a receive signal varies due to interference with the receive signal. The cell phone 1 employs diversity reception in order to assure stable reception against the influence of fading.

The diversity reception uses for example two antennas, a main antenna and a sub antenna and secures the stability of radio wave reception by detecting a receiving field strength of each antenna and selecting the antenna having the greater receiving field strength as a receiving antenna.

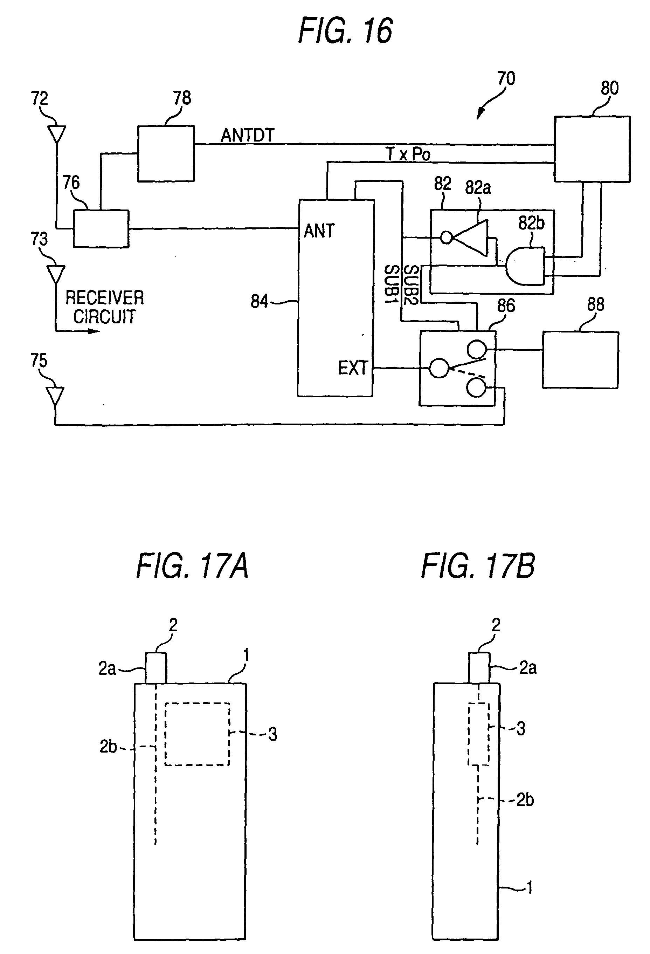

The cell phone 1 has, for example, an antenna configuration shown in Figs. 17A and 17B. Figs. 17A and 17B are explanatory drawings of the antenna arrangement of a related art cell phone. Fig. 17A is a front view of the antenna arrangement. Fig. 17B is a side view of the antenna arrangement.

The cell phone 1 has a whip antenna as a main antenna 2 that may be mounted on the cell phone 1 and located in the upper area of the cell phone 1 and a plane antenna 3 build into the cell phone 1 as a sub antenna.

The whip antenna 2 comprises a helical section 2a and a monopole antenna 2b and is used as a transmitting/receiving antenna. The plane antenna 3 is for example an inverted-F antenna and is used as a receiving-only antenna. Both antennas are connected to a printed circuit (not shown) built into the cell phone 1 and power is fed to these antennas.

With the aforementioned configuration, when the cell phone 1 receives radio waves, the diversity reception procedure switches between the whip antenna 1 and the plane antenna 3. When the phone 1 transmits radio waves, a send signal is transmitted from the whip antenna as a transmitting/receiving antenna.

Thus, transmission by the cell phone 1 is performed only via the whip antenna 2. The transmitting quality solely depends on the whip antenna 2.

Degradation of the transmitting quality of the whip antenna 2 directly leads to the degradation of the transmitting quality of the cell phone 1.

Causes of the degradation of the whip antenna 2 includes for example a case where the radiation of a send signal by the whip antenna 2 is hindered by some obstacle around the whip antenna 2.

Recent reduction in size of the cell phone 1 and the arrangement of the whip antenna 2 on the cell phone 1 have enhanced the possibility that part of a human body, for example the hand of a user comes in contact with the whip antenna 2. In case part of a human body comes in contact with the whip antenna 2, the impedance of the whip antenna 2 varies thus preventing radiation of a send signal at a predetermined power.

Contact with a human body is one of the causes of degradation of transmitting quality of the whip antenna 2.

The invention has been proposed in view of such a situation and aims at providing portable radio apparatus that keeps good transmitting quality.

### Summary of the Invention

A portable radio apparatus for attaining the object is portable radio apparatus of a time division multiple access system having a plurality of antennas characterized in that the apparatus comprises
an antenna selector for selecting a transmitting antenna used for transmission from among the plurality of antennas on a per transmitting slot basis and
a switching transmitter for switching between the transmitting antennas on a per transmitting slot basis and outputting a send signal to the transmitting antenna.

According to the portable radio apparatus of the invention, it is possible to switch between transmitting antennas to output a send signal. Thus it is possible to keep a better transmitting quality than when only a single transmitting antenna is used.

Also, switching between transmitting antennas is possible on a per transmitting slot basis thus allowing faster switching between transmitting antennas.

The portable radio apparatus of the invention is characterized in that the each antenna is a transmitting/receiving antenna capable of radio wave transmission/reception and that
the antenna selector selects as the transmitting antenna a receiving antenna determined by the space diversity at radio wave reception.

According to the portable radio apparatus, it is highly possible that an antenna having a better receiving quality has a good transmitting quality in the next transmitting slot. So it is possible to keep the transmitting quality better.

Switching between transmitting antennas is made by selecting an antenna determined by the space diversity at reception on a per transmitting slot basis. This assures quick adaptive switchover to an antenna having a good transmitting quality.

The portable radio apparatus of the invention is characterized in that the antennas include a transmitting/receiving antenna capable of radio wave transmission/reception, a receiving-only antenna capable of radio wave reception only, and a transmitting-only antenna capable of radio wave transmission only, and that
the antenna selector selects as the transmitting antenna another antenna corresponding to the receiving-only antenna capable of radio wave transmission, in case the receiving antenna determined by the space diversity at radio wave reception is the receiving-only antenna.

According to the portable radio apparatus, in case the receiving antenna is a receiving-only antenna, an antenna corresponding to the receiving-only antenna is selected as a transmitting antenna. This allows switching between transmitting antennas.

The portable radio apparatus of the invention is characterized in that the each antenna is a transmitting/receiving antenna capable of radio wave transmission/reception and that
the antenna selector detects the reflected wave of a send signal on at least one antenna of the plurality of antennas by using a directional coupler and selects the transmitting antenna in accordance with the magnitude of the reflected wave detected.

According to the portable radio apparatus, a transmitting antenna is selected in accordance with the magnitude of the reflected wave of a send signal detected by a directional coupler. Thus it is possible to use the reflected wave to detect that an obstacle or human body is in contact with the antenna and select a transmitting antenna having a good transmitting quality based on the magnitude of the reflected wave.

The portable radio apparatus of the invention is characterized in that the antennas include a transmitting/receiving antenna capable of radio wave transmission/reception and a receiving-only antenna capable of radio wave reception only and that
the antenna selector detects the reflected wave of a send signal on at least one antenna of the plurality of antennas by using a directional coupler and selects the transmitting antenna in accordance with the magnitude of the reflected wave detected.

According to the portable radio apparatus, a transmitting antenna is selected in accordance with the magnitude of the reflected wave of a send signal detected by a directional coupler. Thus it is possible to use the reflected wave to detect that an obstacle or human body is in contact with the antenna and select a transmitting antenna having a good transmitting quality based on the magnitude of the reflected wave.

The portable radio apparatus of the invention is characterized in that the switching transmitter has a signal transmitter and an antenna switching section, that
the signal transmitter outputs the send signal to the antenna switching section, and that
the antenna switching section switches the send signal from the signal transmitter to the transmitting antenna based on the selection result of the antenna selector.

According to the portable radio apparatus, it is possible to selectively output a send signal from a signal transmitter to a transmitting antenna by using an antenna switching section.

The portable radio apparatus of the invention is characterized in that the switching transmitter has a signal transmitter and an antenna switching section, that
the signal transmitter has a plurality of output ports for outputting the send signal, directly connects a first output port as the at least one output port out of the plurality of output ports to the antenna capable of radio wave transmission, and connects a second output port as the at least one output port out of the antenna switching section, that
in case the selection result of the antenna selector is the antenna directly connected to the first output port, the signal transmitter outputs the send signal from the first output port, and that
in case the selection result of the antenna selector is the antenna connectable to the second output port by alternating the antenna switching section, the signal transmitter outputs the send signal from the second output port and the antenna switching section switches to the transmit antenna selected by the antenna selector.

According to the portable radio apparatus, there is no switching sections between a first output port and an antenna connected to the first output port so that a send signal output from a first output port is not subject to a transmission loss caused by a contact.

A send signal output from a second output port can be switched to a transmitting antenna by an antenna switching section.

The portable radio apparatus of the invention is characterized in that the plurality of antennas include a whip antenna as a transmitting/receiving antenna provided on the portable radio apparatus so that the whip antenna is capable of being accommodated in the portable radio apparatus and a monopole antenna as a transmitting/receiving antenna built into a housing of the portable radio apparatus.

According to the portable radio apparatus, a whip antenna and a monopole antenna are provided as transmitting/receiving antennas so that either antenna can be used as a transmitting antenna.

The portable radio apparatus of the invention is portable radio apparatus having a plurality of antennas, comprising an antenna selector for selecting a transmitting antenna used for transmission from among the plurality of antennas and
a switching transmitter for switching between the transmitting antennas and outputting a send signal to the transmitting antenna based on the selection result of the antenna selector, characterized in that
the plurality of antennas include a whip antenna as a transmitting/receiving antenna provided on the portable radio apparatus so that the whip antenna is capable of being accommodated in the portable radio apparatus and a monopole antenna as a transmitting/receiving antenna built into the housing of the portable radio apparatus.

According to the portable radio apparatus, it is possible to switch between transmitting antennas to output a send signal. Thus it is possible to keep the transmitting quality better than when only a single transmitting antenna is used.

Further, a whip antenna and a monopole antenna are provided as transmitting/receiving antennas so that either antenna can be used as a transmitting antenna.

The portable radio apparatus of the invention is characterized in that the monopole antenna is in an approximate L shape having one knee and that the knee is located away from the whip antenna.

According to the portable radio apparatus, a monopole antenna is an inverted-L antenna in an L shape so that the pole length can be increased within a housing.

The knee is located away from the whip antenna. This reduces mutual interference between antennas.

The portable radio apparatus of the invention is portable radio apparatus comprising two housings which can be folded via a hinge, characterized in that
the whip antenna and the monopole antenna are provided in the housings separate from each other.

According to the portable radio apparatus, antennas are provided in separate housings thus reducing mutual interference between antennas.

### Brief Description of the Drawings

Fig. 1 is a circuit block diagram of portable radio apparatus in a first embodiment;
Figs. 2A and 2B show antenna arrangements of portable radio apparatus; Fig. 2A shows an antenna arrangement of portable radio apparatus in the first embodiment; Fig. 2B shows an antenna arrangement of portable radio apparatus in the second embodiment;
Figs. 3A to 3E are explanatory drawings of a monopole antenna; Fig. 3A is a front view of a transmitting/receiving antenna; Fig. 3B is a side view of the transmitting/receiving antenna; Fig. 3C is an enlarged front view of a power feeding section; Fig. 3D is an enlarged side view of a power feeding section; Fig. 3E is a sectional drawing of Section A of a power feeding section;
Fig. 4 is a timing chart of portable radio apparatus;
Fig. 5 is a table showing the transmitting antenna gain improvement ratio of portable radio apparatus per grasp state at a first transmitting frequency;
Figs. 6A to 6F is an explanatory drawing of a grasp state of portable radio apparatus; Fig. 6A is an explanatory drawing showing a grasp state-1; Fig. 6B is an explanatory drawing showing a grasp state-2; Fig. 6C is an explanatory drawing showing a grasp state-3; Fig. 6D is an explanatory drawing showing a grasp state-4; Fig. 6F is an explanatory drawing showing a grasp state-6;
Fig. 7 is a table showing the transmitting antenna gain improvement ratio of portable radio apparatus per grasp state at a second transmitting frequency;
Fig. 8 is a circuit block diagram of portable radio apparatus in a second embodiment;
Fig. 9 is a circuit block diagram of portable radio apparatus in a third embodiment;
Fig. 10 is a block diagram of a reflected wave detector;
Fig. 11 is a timing chart of portable radio apparatus;
Fig. 12 is a block diagram showing the configuration of portable radio apparatus in the fourth embodiment;
Fig. 13 is a block diagram showing the configuration of portable radio apparatus in the fifth embodiment;
Fig. 14 is a block diagram showing the configuration of portable radio apparatus in the sixth embodiment;
Fig. 15 is a block diagram showing the configuration of portable radio apparatus in the seventh embodiment;
Fig. 16 is a block diagram showing the configuration of portable radio apparatus in the eighth embodiment;
Figs. 17A and 17B explain an antenna arrangement of a related art cell phone; Fig. 17A is a front view thereof; Fig. 17B is a side view thereof.

In the drawings, a numeral 10 represents portable radio apparatus, 10a an upper housing, 10b a lower housing, 10c a hinge, 12 a transmitting/receiving antenna, 13 a receiving-only antenna, 14 a transmitting/receiving antenna, 14a a knee, 14b an antenna slope section, 14c an antenna end, 14c1 a protrusion, 15 a receiving-only antenna, 16 a space diversity, 18 a controller, 20 a logic circuit, 20a an inverter, 20b and AND circuit, 22 a signal transmitter, 24 an antenna switching section, 26 an external output terminal, 36 a directional coupler., 38 a reflected wave detector, 38a a detection holder, 38b a comparator, 38c a reference voltage section, Rx a receiving slot, Tx a transmitting slot, BRNC a determination result, ANTDT a reflected wave detecting signal, TxPo a power on signal, SUB1 a switching signal, and SUB2 is a switching signal.

### Detailed Description of the Preferred Embodiments

The portable radio apparatus of the invention will be described referring to the following drawings.

### [First embodiment]

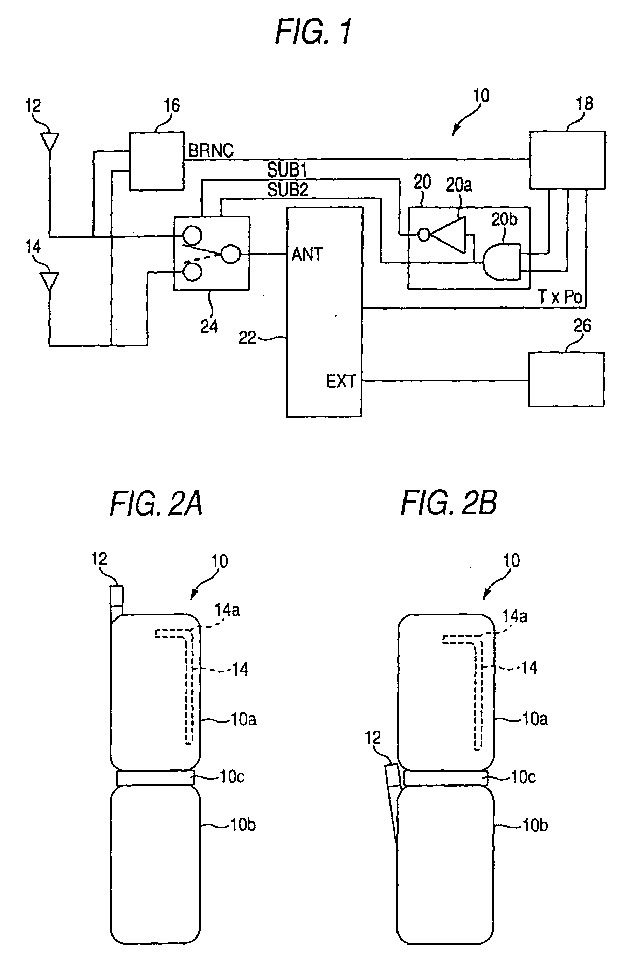

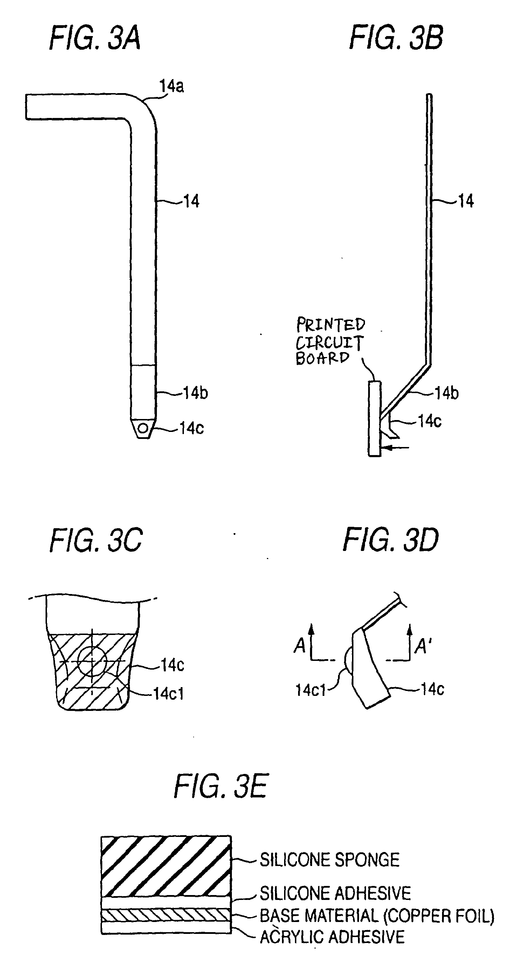

Fig. 1 is a circuit block diagram of portable radio apparatus in this embodiment. Figs. 2A and 2B show antenna arrangements of the portable radio apparatus. Figs. 3A to 3E are explanatory drawings of a monopole antenna.

The portable radio apparatus 10 of the embodiment comprises units including transmitting/receiving antennas 12, 14, a space diversity 16, a controller 18 and a logic circuit 20 as an antenna selector, a signal transmitter 22 and an antenna switching section 24 as a switching transmitter, and an external output terminal 26.

Each unit of the portable radio apparatus 10 will be detailed.

The transmitting/receiving antennas 12, 14 are transmitting/receiving antennas commonly available for transmission and reception. Both antennas are also connected to a receiver (not shown). Figs. 2A and 2B show examples of antenna arrangement of the transmitting/receiving antennas 12 and 14 in the portable radio apparatus 10.

The portable radio apparatus 10 in the first embodiment shown in Fig. 2A comprises an upper housing 10a and a lower housing 10b rotatably coupled via a hinge 10c and can be folded.

The transmitting/receiving antenna 12 is a whip antenna mountably provided on the head of the upper housing 10a. Fig. 2A shows the state where the transmitting/receiving antenna 12 is housed.

The transmitting/receiving antenna 14 is built into the upper housing 10a and its antenna shape is an approximate L shape having one knee 14a.

The portable radio apparatus 10 in another embodiment or in the second embodiment shown in Fig. 2B is foldable the same as the portable radio apparatus in Fig. 2A. The transmitting/receiving antenna 14 in an approximate L shape is built into the upper housing 10a. The transmitting/receiving antenna 12 is a whip antenna provided mountably on the side face of the lower housing 10b.

The knee 14a of the transmitting/receiving antenna 14 each of both portable radio apparatus is located away from the transmitting/receiving antenna 12.

The shape and configuration of the transmitting/receiving antenna 14 will b described referring to Figs. 3A to 3E.

Fig. 3A is a front view of a transmitting/receiving antenna 14. Fig. 3B is a side view of the transmitting/receiving antenna 14. Fig. 3C is an enlarged front view of a power feeding section. Fig. 3D is an enlarged side view of a power feeding section. Fig. 3E is a sectional drawing of Section A of a power feeding section.

The transmitting/receiving antenna 14 is a copper foil tape having an approximate constant width and has the knee 14a, an antenna slope section 14b, and an antenna end 14c. The antenna section 14a serves as an antenna power feeding section of an antenna and comes in contact with a contact on a printed circuit built into the upper housing 10a. The antenna slope section 14b is provided to energize the antenna end 14c in the direction of the contact when the antenna end 14c comes in contact with this contact so as to enhance the contact pressure with the contact thus ensuring contact continuity.

As shown in Fig. 3C and D, the antenna end 14c provides a protrusion 14c1 of an approximate semispherical shape on the contact face with the contact. The protrusion 14c1 comprises, as shown in Fig. 3E, a silicone sponge, a silicone adhesive, a base material (copper foil), and acrylic adhesive. The contact and the copper foil as a base material are electrically continuous via a silicone sponge and a silicone adhesive.

While the transmitting/receiving antenna 14 is composed of a copper foil tape in the above example, in case a flexible printed circuit is present in the housing 10a, an antenna element may be formed on the flexible printed circuit and used as a transmitting/receiving antenna 14.

The space diversity 16 determines the receiving antenna used for a receiving slot based on the receiving field strength of a receive signal received by the transmitting/receiving antenna 12, 14 and outputs the receiving antenna determination result BRNC to the controller 18.

The controller 18 outputs a control signal to a logic circuit 20 in the subsequent stage on input of the determination result BRNC of the receiving antenna output from the space diversity 16.

The logic circuit 20, on input of a control signal from the controller 18, outputs switching signals SUB1, SUB2 for selecting a transmitting antenna to the antenna switching section 24. The inside of the logic circuit 20 comprises, for example, an inverter 20a and an AND circuit 20b. Another logic circuit may be used as long as it can output switching signals SUB1, SUB2. Or, a single switching signal output may be used to allow instruction on antenna switching to the antenna switching section 24.

The signal transmitter 22 is a unit for outputting a send signal per transmit slot based on a power on signal TxPo from the controller 18. The send signal is output to an antenna switching section 24 in the subsequent stage from the output port ANT.

The antenna switching section 24 is a selector switch for selecting a transmitting antenna for outputting a send signal from the output port ANT of the signal transmitter 22 based on the switching signals SUB1, SUB2 from the logic circuit 20.

The external output terminal 26 is an output terminal for connecting an output signal from the output port EXT to external apparatus (not shown).

This is the end of the explanation on the configuration of the portable radio apparatus 10.

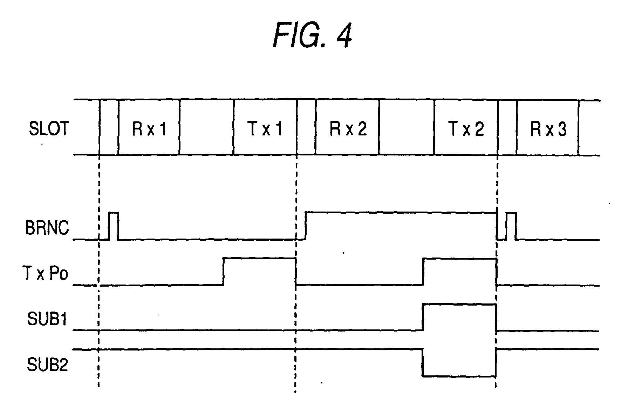

Next, operation of the portable radio apparatus 10 of the aforementioned configuration will be described referring to Fig. 4. Fig. 4 is a timing chart of portable radio apparatus.

The uppermost slot in the timing chart chronologically shows the timing of a transmitting/receiving antenna slot of a time division multiple access system. The time division multiple access systems include an FDD (Frequency Division Duplex) system where radio wave reception and transmission is made by way of time division and telecommunication frequency differs between reception and transmission, and a TDD (Time Division Duplex) system where the same telecommunication frequency is used for reception and transmission. The invention is applicable to both systems.

Just before the receiving slot Rx is a determination period for the space diversity 16 to determine a receiving antenna. In this determination period, the receiving antenna determination result BRNC is output to the controller 18. In this embodiment, in case the determination result remains Low (hereinafter abbreviated as L) in a receiving slot Rx from the end of the determination period to next determination period, the transmitting/receiving antenna 12 is selected as a receiving antenna. In case the determination result remains High (hereinafter abbreviated as H), the transmitting/receiving antenna 14 is selected as a receiving antenna.

The period from the receiving slot Rx to next transmitting slot Tx is an idle slot as a transmitting/receiving period irrelevant to channels of the portable radio apparatus 10.

In the transmitting slot Tx, the signal transmitter 22 is powered when the power on signal TxPo from the controller 18 goes "H" and outputs a send signal from an output port ANT to an antenna switching section 24.

At the same time, in case the determination result BRNC is "L", the controller 18 outputs a control signal so that the switching signal SUB1 from the logic circuit 20 will be driven "L" and the switching signal SUB2 will be driven "H". In case the determination result BRNC is "H", the controller 18 outputs a control signal so that the switching signal SUB1 from the logic circuit 20 will be driven "H" and the switching signal SUB2 will be driven "L".

The antenna switching section 24, in case the switching signal SUB1 from the logic circuit 20 is "L" and the switching signal SUB2 is "H", selects a transmitting/receiving antenna 12 as a transmitting antenna (solid line in the antenna switching section 24). In case the switching signal SUB1 from the logic circuit 20 is "H" and the switching signal SUB2 is "L", the antenna switching section 24 selects a transmitting/receiving antenna 14 as a transmitting antenna (dotted line in the antenna switching section 24).
operation of transmission antenna switching is described referring to the timing chart.

In a receiving slot Rx1, the determination result BRNC of the space diversity 16 is "L" so that a transmitting/receiving antenna 12 is selected as a receiving antenna. When the idle slot is passed and a transmitting slot Tx1 is reached, the signal transmitter 22 is powered by way of a power on signal TxPo. In this practice, the switching signal SUB1 from the logic circuit 20 is "L" and the switching signal SUB2 is "H" so that the antenna switching section 24 selects a transmitting/receiving antenna 12 as a transmitting antenna.

In the receiving slot Rx2, the determination result BRNC of the space diversity 16 is "H" so that a transmitting/receiving antenna 14 is selected as a receiving antenna. When the idle slot is passed and a transmitting slot Tx2 is reached, the signal transmitter 22 is powered by way of a power on signal TxPo. At the same time, the switching signal SUB1 from the logic circuit 22 goes "H" and the switching signal SUB2 goes "L". Thus the antenna switching section 24 selects a transmitting/receiving antenna 14 as a transmitting antenna.

In the embodiment, a transmitting/receiving antenna selected as a receiving antenna by the space diversity in a receiving slot is selected as a transmitting antenna in a transmitting slot.

It is highly possible that a transmitting/receiving antenna with good receiving quality has a good transmitting in transmission of next transmission slot. Such a transmitting/receiving antenna can keep a better transmitting quality.

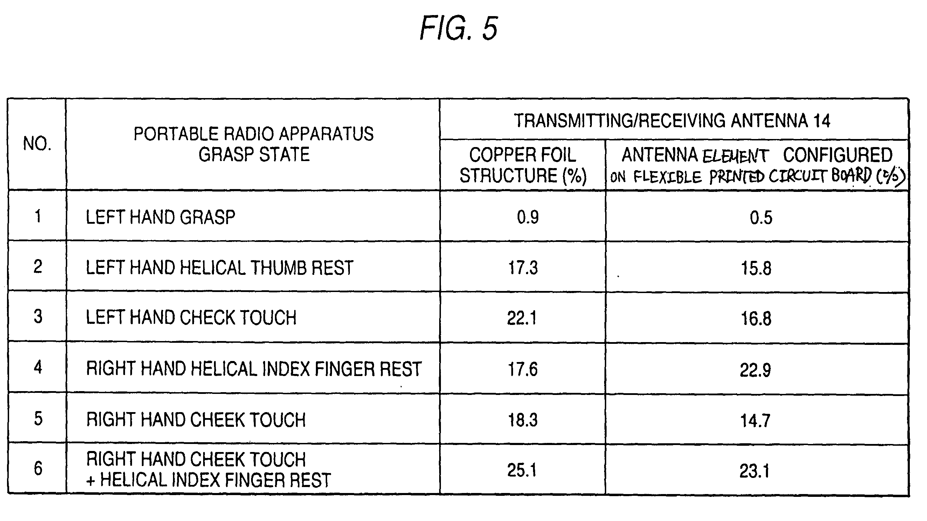

Improvement of the transmitting antenna gain per grasp state assumed when the transmitting/receiving antenna 14 of the portable radio apparatus 10 in this embodiment is used as a transmitting antenna will be described referring to Figs. 5 through 7.

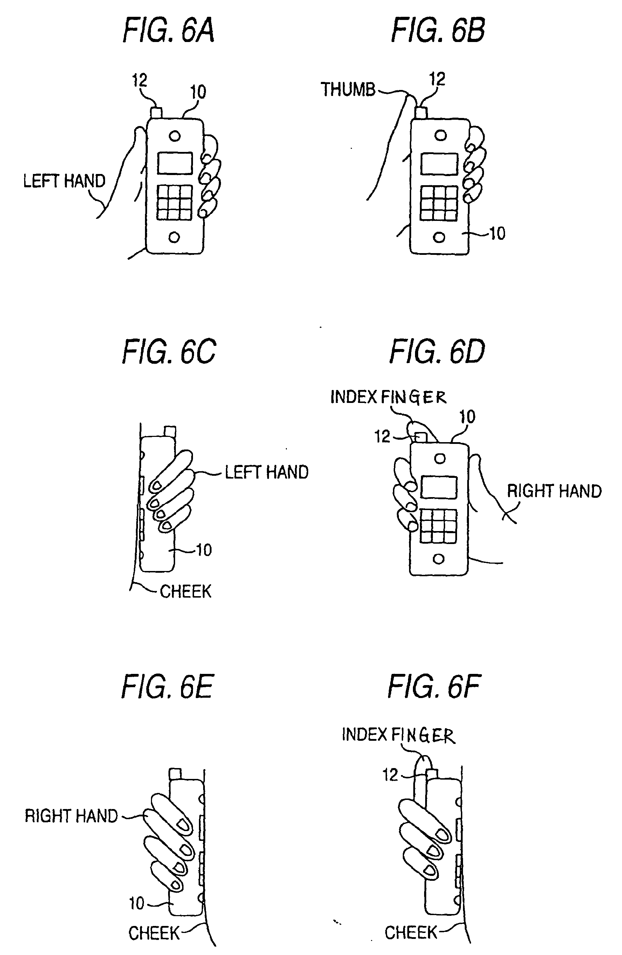

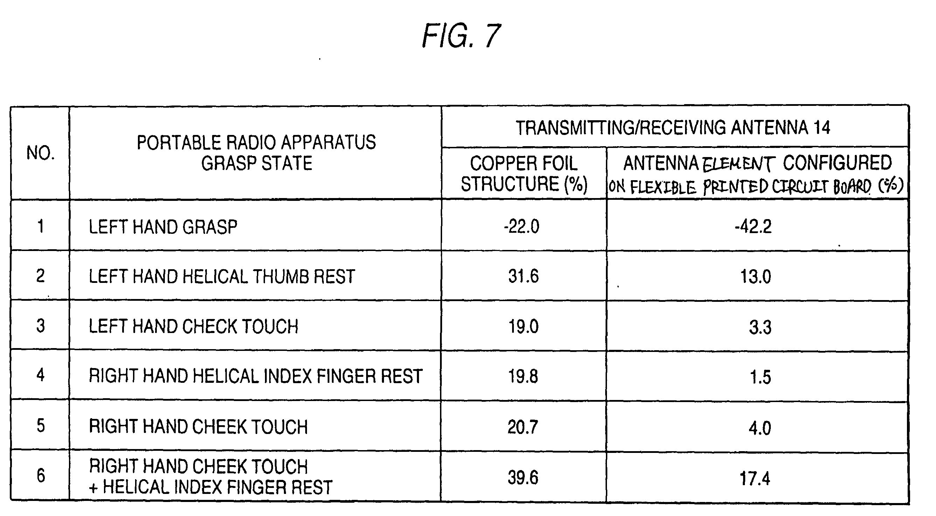

Fig. 5 is a table showing the transmitting antenna gain improvement ratio of portable radio apparatus per grasp state at a first transmitting frequency. Figs. 6A to 6F are explanatory drawings of a grasp state of portable radio apparatus. Fig. 7 is a table showing the transmitting antenna gain improvement ratio of portable radio apparatus per grasp state at a second transmitting frequency.

In the measurement of the transmitting antenna gain shown in Fig. 5, the transmitting frequency is 960 MHz (first transmitting frequency). A transmitting antenna as a reference for the transmission antenna gain improvement ratio is a transmitting/receiving antenna 12. The transmitting/receiving antenna 12 is housed in the main unit while measurement is in progress.

Then, the transmitting/receiving antenna 14 built into the housing is selected and the transmitting antenna gain is compared between the transmitting/receiving antenna 14 and the transmitting/receiving antenna 12.

The grasp state of portable radio apparatus in Fig. 5 will be described referring to Figs. 6A to 6F. Grasp state-1 "Left hand grasp" shows a state where the user grasps portable radio apparatus 10 with his/her left hand and part of a human body such as a hand is not in contact with the transmitting/receiving antenna 12 and only the left hand is in contact with the main unit of the portable radio apparatus 10, as shown in Fig. 6A.

Grasp state-2 "Left hand helical thumb rest" shows a state where the portable radio apparatus 10 is grasped with the thumb of the left hand of the user being in contact with the transmitting/receiving antenna 12 (in details, helical antenna section of the whip antenna), as shown in Fig. 6B.

Grasp state-3 "Left hand cheek touch" shows a state where the portable radio apparatus 10 is grasped without the fingers of the user's left hand do not come in contact with the transmitting/receiving antenna 12 while the cheek of a human body is in contact with the receiver side of the portable radio apparatus 10, as shown in Fig. 6C.

Grasp state-4 "Right hand helical index finger rest" shows a state where the portable radio apparatus 10 is grasped with the thumb of the left hand of the user being in contact with the transmitting/receiving antenna 12, as shown in Fig. 6D.

Grasp state-5 "Right hand cheek touch" shows a state where the portable radio apparatus 10 is grasped without the fingers of the user's right hand do not come in contact with the transmitting/receiving antenna 12 while the cheek of a human body is in contact with the receiver side of the portable radio apparatus 10, as shown in Fig. 6E.

Grasp state-6 "Right hand cheek touch + helical index finger rest" shows a state where the portable radio apparatus 10 is grasped so that the index finger of the user's right hand comes in contact with the transmitting/receiving antenna 12 while the cheek of a human body is in contact with the receiver side of the portable radio apparatus 10, as shown in Fig. 6F.

As shown in Fig. 5, comparison of the gain of the transmitting/receiving antenna 14 with that of the transmitting/receiving antenna 12 on a per grasp state basis proved an improvement in the transmitting antenna gain by way of the transmitting/receiving antenna 14, irrespective of the grasp state employed. In particular, in a case where a finger is placed on the transmitting/receiving antenna 12 and a case where the cheek of a human body is in contact with the receiver side of the portable radio apparatus 10, a remarkable gain improvement of 14.7 to 22.9 percent is attained.

In a configuration where a transmitting antenna having a better transmitting antenna gain is selected, it is possible to maintain a good transmitting antenna gain by selecting the transmitting/receiving antenna 14 as a transmitting antenna, even when a finger is placed on the transmitting/receiving antenna 12 or when the cheek of a human body is in contact with the receiver side of the portable radio apparatus 10.

Even in case the transmitting/receiving antenna 14 is a copper foil as described referring to Figs. 3A to 3E or in case an antenna element is formed on a flexible printed circuit, the transmitting antenna gain is improved.

Next, In the measurement of the transmitting antenna gain shown in Fig. 7, the transmitting frequency is 1441 MHz (second transmitting frequency). A transmitting antenna as a reference for the transmission antenna gain improvement ratio is a transmitting/receiving antenna 12. The transmitting/receiving antenna 12 is housed in the main unit and switched to the transmitting/receiving antenna 12 housed in the housing to compare the transmitting antenna gain of the transmitting/receiving antenna 14 with that of the transmitting/receiving antenna 12.

As shown in Fig. 7, comparison of the gain of the transmitting/receiving antenna 14 with that of the transmitting/receiving antenna 12 on a per grasp state basis proved an improvement in the transmitting antenna gain by way of the transmitting/receiving antenna 14, in any grasp state other than the grasp state-1. In particular, in a case where a finger is placed on the transmitting/receiving antenna 12 and a case where the cheek of a human body is in contact with the receiver side of the portable radio apparatus 10, a remarkable gain improvement of 19.8 to 39.6 percent is attained.

In a configuration where a transmitting antenna having a better transmitting antenna gain is selected, it is possible to maintain a good transmitting antenna gain by selecting the transmitting/receiving antenna 14 as a transmitting antenna, even when a finger is placed on the transmitting/receiving antenna 12 or when the cheek of a human body is in contact with the receiver side of the portable radio apparatus 10.

Even in case the transmitting/receiving antenna 14 is a copper foil as described referring to Figs. 3A to 3E or in case an antenna element is formed on a flexible printed circuit, the transmitting antenna gain is improved as much as 1.5 to 17.7 percent, except for the grasp state-1.

### [Second embodiment]

Next, assume a case where a transmitting/receiving antenna capable of radio wave transmission/reception, a receiving-only antenna capable of radio wave reception only and a transmitting-only antenna capable of radio wave transmission only are included as antennas.

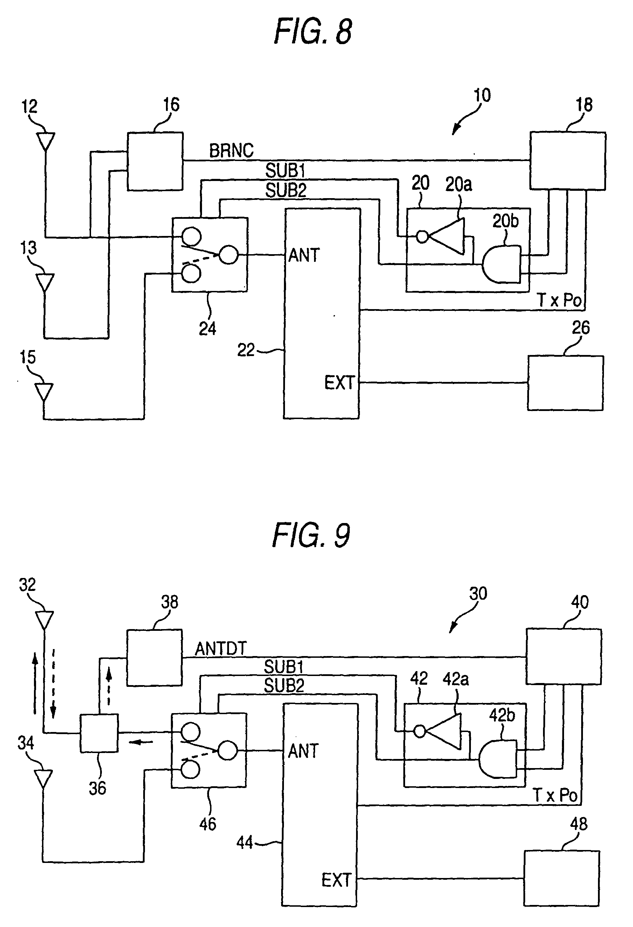

Fig. 8 is a circuit block diagram of portable radio apparatus in a second embodiment. The portable radio apparatus in this embodiment differs from the portable radio apparatus 10 in the first embodiment in that a receiving-only antenna 13 and a transmitting-only antenna 15 are included as antennas. Either the receiving-only antenna 13 and the transmitting/receiving antenna 12 is determined as a receiving antenna by the space diversity 16. Further, either the transmitting-only antenna 15 and the transmitting/receiving antenna 12 is selected as a transmitting antenna by the antenna switching section 24.

Features of the other units are the same as those of the portable radio apparatus 10 in the first embodiment. Features and operation of this embodiment will be described.

In a determination period for the space diversity 16 to determine a receiving antenna, the receiving antenna determination result BRNC is output to the controller 18. In this embodiment, in case the determination result BRNC remains "L" in a receiving slot Rx from the end of the determination period to next determination period, the transmitting/receiving antenna 12 is selected as a receiving antenna. In case the determination result BRNC remains "H", the receiving-only antenna 13 is selected as a receiving antenna.

In the transmitting slot Tx, in case the switching signal SUB1 from the logic circuit 20 is "L" and the switching signal SUB2 is "H", the antenna switching section 24 selects transmitting/receiving antenna 12 as a transmitting antenna (solid line in the antenna switching section 24). In case the switching signal SUB1 from the logic circuit 20 is "H" and the switching signal SUB2 is "L", the antenna switching section 24 selects a transmitting-only antenna 15 (dotted line in the antenna switching section 24) as a transmitting antenna.
operation of transmission antenna switching will be described referring to the timing chart of Fig. 4.

In a receiving slot Rx1, the determination result BRNC of the space diversity 16 is "L" so that a transmitting/receiving antenna 12 is selected as a receiving antenna. When the idle slot is passed and a transmitting slot Tx1 is reached, the signal transmitter 22 is powered by way of a power on signal TxPo. In this practice, the switching signal SUB1 from the logic circuit 20 is "L" and the switching signal SUB2 is "H" so that the antenna switching section 24 selects a transmitting/receiving antenna 12 as a transmitting antenna.

In the receiving slot Rx2, the determination result BRNC of the space diversity 16 is "H" so that a receiving-only antenna 13 is selected as a receiving antenna. When the idle slot is passed and a transmitting slot Tx2 is reached, the signal transmitter 22 is powered by way of a power on signal TxPo. At the same time, the switching signal SUB1 from the logic circuit 22 goes "H" and the switching signal SUB2 goes "L". Thus the antenna switching section 24 selects a transmitting-only antenna 15 as a transmitting antenna.

This, in case a transmitting/receiving antenna 12 is selected as a receiving antenna by the space diversity 16, the transmitting/receiving antenna 12 is also selected as a transmitting antenna. In case a receiving-only antenna 13 is selected as a receiving antenna by the space diversity 16, the transmitting-only antenna 15 corresponding to the receiving-only antenna is selected as a transmitting antenna.

In this embodiment, it is possible to select as a transmitting antenna an antenna capable of transmission corresponding to an antenna selected as a receiving antenna by the space diversity 16 in the receiving slot.

### [Third embodiment]

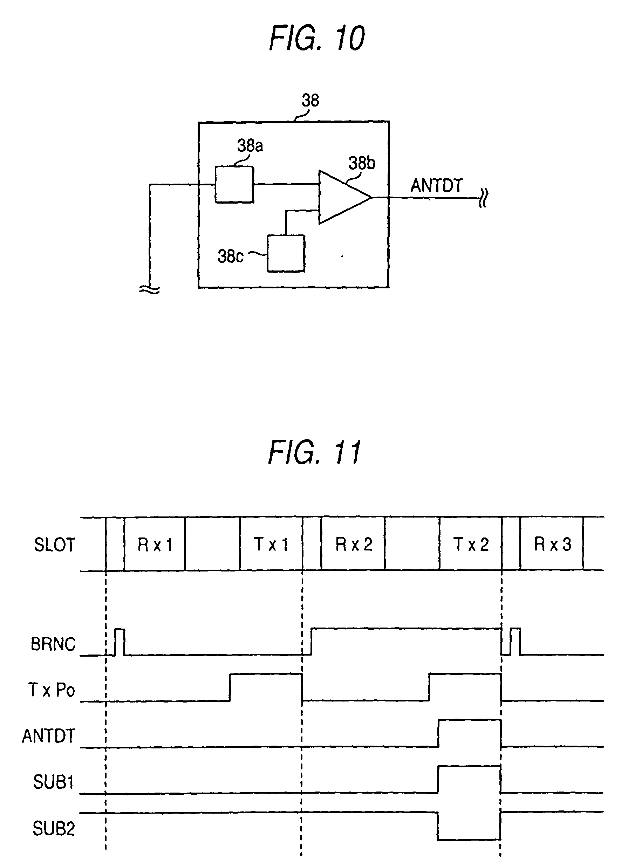

Fig. 9 is a circuit block diagram of portable radio apparatus in the third embodiment. Fig. 10 is a block diagram of a reflected wave detector. Fig. 11 is a timing chart of portable radio apparatus.

The portable radio apparatus 30 of this embodiment comprises units including transmitting/receiving antennas 32, 34, a directional coupler 36, a reflected wave detector 38, a controller 40 and a logic circuit 41 as an antenna selector, a signal transmitter 44 and an antenna switching section 46 as a switching transmitter, and an external output terminal 48.

Each unit of the portable radio apparatus 30 will be detailed.

The transmitting/receiving antennas 32, 34 are transmitting/receiving antennas commonly available for transmission and reception. Both antennas are also connected to a receiver (not shown). An example of antenna arrangement of transmitting/receiving antennas 32, 34 in the portable radio apparatus 30 is the same as the transmitting/receiving antennas 12 and 14 in Figs. 2A and 2B referred to in the first embodiment. The shape and configuration of the transmitting/receiving antenna 34 are the same as those of the transmitting/receiving antenna 14 in Figs. 3A to 3E so that the corresponding description is omitted.

The directional coupler 36 can transmit to the transmitting/receiving antenna 32 with virtually no loss a send signal output from the signal transmitter 44 via the antenna switching section 46 described later. The directional coupler 36 outputs the reflected wave of a send signal irradiated from the transmitting/receiving antenna 32 to the reflected wave detector 38 in the subsequent stage.

For example, assume a case where part of a human body for example the hand comes in contact with (or in close proximity of) the transmitting/receiving antenna 32. When the hand comes in contact with the transmitting/receiving antenna 32, the impedance of the transmitting/receiving antenna 32 varies thus preventing radiation of a send signal at a predetermined power, and a reflected wave of the send signal is returned from the transmitting/receiving antenna 32. Or, the power and amplitude of the reflected wave increases than when the hand is not in contact or not in close proximity.

The reflected wave (dotted line arrow in Fig. 9) is input to the directional coupler 36 in the opposite direction to the send signal (solid line arrow in Fig. 9) thus is output to the reflected wave detector 38 by the directional coupler 36.

Next, the reflected wave detector 38 will be described referring to Fig. 10. The reflected wave detector 38 comprises a detection hold section 38a, a comparator 38b and a reference voltage section 38c. The detection hold section 38a detects a reflected wave output from the directional coupler 36 and holds the detected voltage Vdet of the reflected wave in the transmitting slot period. The comparator 38b compares the detected voltage Vdet of the reflected wave received from the detection hold section 38a with the reference voltage Vref received from the reference voltage section 38c. In case the detected voltage Vdet is greater than the reference voltage Vref, the reflected wave detecting signal ANTDT is output as an "H" signal. In case the detected voltage Vdet is smaller than the reference voltage Vref, the reflected wave detecting signal ANTDT is output as an "L" signal.

The controller 40 outputs a control signal to a logic circuit 42 in the subsequent stage on input of the reflected wave detecting signal ANTDT output from the reflected wave detector 38.

The logic circuit 42, on input of a control signal from the controller 40, outputs switching signals SUB1, SUB2 for selecting a transmitting antenna to the antenna switching section 46. The inside of the logic circuit 42 comprises, for example, an inverter 42a and an AND circuit 42b. Another logic circuit may be used as long as it can output switching signals SUB1, SUB2. Or, a single switching signal output may be used to allow instruction on antenna switching to the antenna switching section 46.

The signal transmitter 44 is a unit for outputting a send signal per transmit slot based on a power on signal TxPo from the controller 40. The send signal is output to an antenna switching section 46 in the subsequent stage from the output port ANT.

The antenna switching section 46 is a selector switch for selecting a transmitting antenna for outputting a send signal from the output port ANT of the signal transmitter 44 based on the switching signals SUB1, SUB2 from the logic circuit 42.

The external output terminal 48 is an output terminal for connecting an output signal from the output port EXT to external apparatus (not shown).

This is the end of the explanation on the configuration of the portable radio apparatus 30.

Next, operation of the portable radio apparatus 30 of the aforementioned configuration will be described referring to Fig. 11. Fig. 11 is a timing chart of portable radio apparatus.

The uppermost slot in the timing chart chronologically shows the timing of a transmitting/receiving antenna slot of a time division multiple access system.

The period from the receiving slot Rx to next transmitting slot Tx is an idle slot as a transmitting/receiving period irrelevant to channels of the portable radio apparatus 30.

In the transmitting slot Tx, the signal transmitter 44 is powered when the power on signal TxPo from the controller 40 goes "H" and outputs a send signal from an output port ANT to an antenna switching section 46.

The antenna switching section 46, in case the switching signal SUB1 from the logic circuit 42 is "L" and the switching signal SUB2 is "H", selects a transmitting/receiving antenna 32 as a transmitting antenna (solid line in the antenna switching section 46). In case the switching signal SUB1 from the logic circuit 42 is "H" and the switching signal SUB2 is "L", the antenna switching section 46 selects a transmitting/receiving antenna 34 as a transmitting antenna (dotted line in the antenna switching section 46).
operation of transmission antenna switching is described referring to the timing chart.

When the receiving slot Rx1 and the idle slot are passed and a transmitting slot Tx1 is reached, the signal transmitter 44 is powered. In this practice, the reflected wave detecting signal ANTDT of the reflected wave detector 38 is "L", that is, the detected voltage Vdet of the reflected wave on the transmitting/receiving antenna 32 is smaller than the reference voltage Vref, so that a control signal from the controller 40 drives the switching signal SUB1 from the logic circuit 42 "L" and the switching signal SUB2 "H". The antenna switching section 46 selects a transmitting/receiving antenna 32 as a transmitting antenna.

In the receiving slot Rx2, the reflected wave detecting signal ANTDT goes "L". When the idle slot is passed and a transmitting slot Tx2 is reached, the signal transmitter 44 is powered. In this practice, the reflected wave detecting signal ANTDT of the reflected wave detector 38 is "H", that is, the detected voltage Vdet of the reflected wave on the transmitting/receiving antenna 32 is greater than the reference voltage Vref, so that a control signal from the controller 40 drives the switching signal SUB1 from the logic circuit 42 "H" and the switching signal SUB2 "L". The antenna switching section 46 selects a transmitting/receiving antenna 34 as a transmitting antenna.

In case the reflected wave on the transmitting/receiving antenna 32 is output to the reflected wave detector 38 by the directional coupler 36 and the voltage Vdet detected by the reflected wave detector 38 is smaller than the reference voltage Vref, the transmitting/receiving antenna 32 is selected as a transmitting antenna. In case the detected voltage Vdet is greater than the reference voltage Vref, the transmitting/receiving antenna 34 is selected as a transmitting antenna.

In this embodiment, in case the reflected wave is smaller than a predetermined value, the transmitting/receiving antenna 32 is selected as a transmitting antenna. In case the reflected wave is greater than a predetermined value, it is assumed that part of a human body, for example the hand of a user has come in contact with (or in close proximity of) the transmitting/receiving antenna 32, then the transmitting/receiving antenna 34 is selected as a transmitting antenna instead of the transmitting/receiving antenna 32. This allows use of an antenna with a higher antenna gain as a transmitting antenna.

In this embodiment, even after the transmitting/receiving antenna 34 is selected as a transmitting antenna, it is possible to output a send signal from the transmitting/receiving antenna 32 each time a transmitting slot starts and detect the level of the reflected wave on the transmitting/receiving antenna 32 then switch between transmitting antennas. By doing so, it is possible to switch between transmitting antennas by using the reflected wave on the transmitting/receiving antenna 32 as a switching reference.

While a directional coupler is connected to only the transmitting/receiving antenna 32 in this embodiment, It is possible to connect a directional coupler to the transmitting/receiving antenna 34 also (connect a reflected detector as well) and compare the outputs of reflected waves from both directional couplers with each other. Or, it is possible to compare each reflected wave with each. reference voltage thus determining switchover of a transmitting antenna in a comprehensive way.

### [Fourth embodiment]

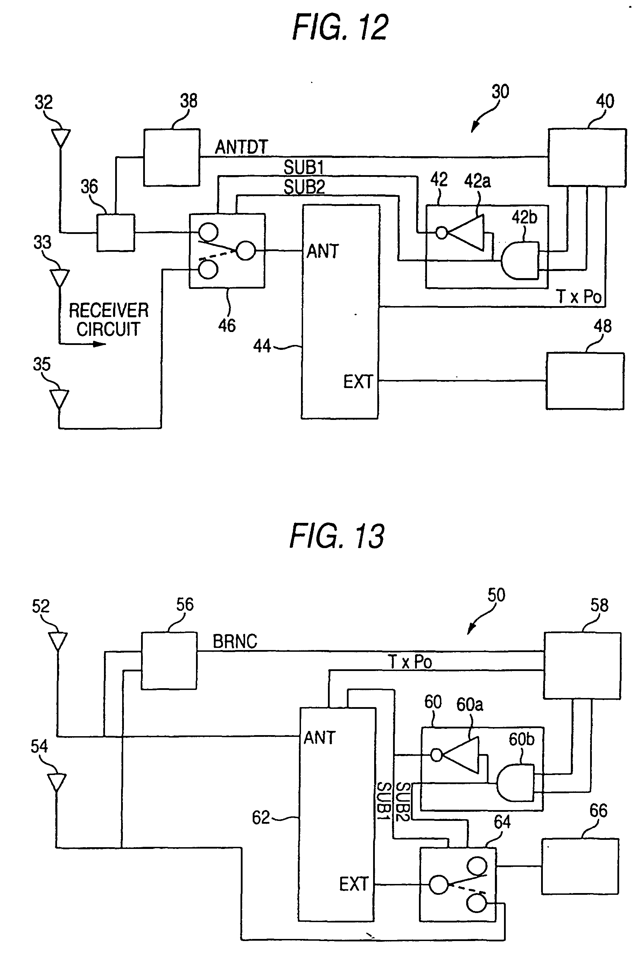

The fourth embodiment of the invention will be described referring to Fig. 12.

Fig. 12 is a block diagram showing the configuration of portable radio apparatus in the fourth embodiment.

The portable radio apparatus in the fourth embodiment differs from the portable radio apparatus 30 in the third embodiment in that a receiving-only antenna 33 capable of radio wave reception only and a transmitting-only antenna 35 capable of radio wave transmission only are included as antennas. The receiving-only antenna 33 is connected to a receiver circuit. Either the transmitting-only antenna 35 and the transmitting/receiving antenna 32 is selected as a transmitting antenna by the antenna switching section 46.

Features of the other units are the same as those of the portable radio apparatus 30 in the third embodiment. Features and operation of this embodiment will be described.

In the transmitting slot Tx, in case the switching signal SUB1 from the logic circuit 42 is "L" and the switching signal SUB2 is "H", the antenna switching section 46 selects transmitting/receiving antenna 32 as a transmitting antenna (solid line in the antenna switching section 46). In case the switching signal SUB1 from the logic circuit 42 is "H" and the switching signal SUB2 is "L", the antenna switching section 46 selects a transmitting-only antenna 35 (dotted line in the antenna switching section 46) as a transmitting antenna.
operation of transmission antenna switching will be described referring to the timing chart of Fig. 11.

When the receiving slot Rx1 and the idle slot are passed and a transmitting slot Tx1 is reached, the signal transmitter 44 is powered. In this practice, the reflected wave detecting signal ANTDT of the reflected wave detector 38 is "L", that is, the detected voltage Vdet of the reflected wave on the transmitting/receiving antenna 32 is smaller than the reference voltage Vref, so that a control signal from the controller 40 drives the switching signal SUB1 from the logic circuit 42 "L" and the switching signal SUB2 "H". The antenna switching section 46 selects a transmitting/receiving antenna 32 as a transmitting antenna.

In the receiving slot Rx2, the reflected wave detecting signal ANTDT goes "L". When the idle slot is passed and a transmitting slot Tx2 is reached, the signal transmitter 44 is powered. In this practice, the reflected wave detecting signal ANTDT of the reflected wave detector 38 is "H", that is, the detected voltage Vdet of the reflected wave on the transmitting/receiving antenna 32 is greater than the reference voltage Vref, so that a control signal from the controller 40 drives the switching signal SUB1 from the logic circuit 42 "H" and the switching signal SUB2 "L". The antenna switching section 46 selects a transmitting-only antenna 35 as a transmitting antenna.

In case the reflected wave on the transmitting/receiving antenna 32 is output to the reflected wave detector 38 by the directional coupler 36 and the voltage Vdet detected by the reflected wave detector 38 is smaller than the reference voltage Vref, the transmitting/receiving antenna 32 is selected as a transmitting antenna. In case the detected voltage Vdet is greater than the reference voltage Vref, the transmitting-only antenna 35 is selected as a transmitting antenna.

In this embodiment, in case the reflected wave is smaller than a predetermined value, the transmitting/receiving antenna 32 is selected as a transmitting antenna. In case the reflected wave . is greater than a predetermined value, it is assumed that part of a human body, for example the hand of a user. has come in contact with (or in close proximity of) the transmitting/receiving antenna 32, then the transmitting-only antenna 35 is selected as a transmitting antenna instead of the transmitting/receiving antenna 32. This allows use of an antenna with a higher antenna gain as a transmitting antenna.

### [Fifth embodiment]

The fifth embodiment of the invention will be described referring to Fig. 13.

Fig. 13 is a circuit block diagram of portable radio apparatus in the fifth embodiment.

The portable radio apparatus 50 of this embodiment comprises units including transmitting/receiving antennas 52, 54, a space diversity 56, a controller 58 and a logic circuit 60 as an antenna selector, a signal transmitter 62 and an antenna switching section 64 as a switching transmitter, and an external output terminal 66.

Each unit of the portable radio apparatus 50 will be detailed.

The transmitting/receiving antennas 53, 54 are transmitting/receiving antennas commonly available for transmission and reception. Both antennas are also connected to a receiver (not shown). An example of antenna arrangement of transmitting/receiving antennas 52, 54 in the portable radio apparatus 50 is the same as the transmitting/receiving antennas 12 and 14 in Figs. 2A and 2B referred to in the first embodiment. The shape and configuration of the transmitting/receiving antenna 54 are the same as those of the transmitting/receiving antenna 14 in Figs. 3A to 3E so that the corresponding description is omitted.

The space diversity 56 determines the receiving antenna used for a receiving slot based on the receiving field strength of a receive signal received by the transmitting/receiving antenna 52, 54 and outputs the receiving antenna determination result BRNC to the controller 58.

The controller 58 outputs a control signal to a logic circuit 60 in the subsequent stage on input of the determination result BRNC of the receiving antenna output from the space diversity 56.

The logic circuit 60, on input of a control signal from the controller 18, outputs switching signals SUB1, SUB2 for selecting a transmitting antenna to the antenna switching section 64. The inside of the logic circuit 60 comprises, for example, an inverter 60a and an AND circuit 60b. Another logic circuit may be used as long as it can output switching signals SUB1, SUB2. Or, a single switching signal output may be used to allow instruction on antenna switching to the antenna switching section 64.

The switching signal SUB 1 from the logic circuit 60 is also output to a signal transmitter 62 described later and performs switching so as to output a send signal to an output port ANT as a first output port or an output port EXT as a second output port.

The signal transmitter 62 is a unit for outputting a send signal per transmit slot based on a power on signal TxPo from the controller 58. The send signal is output to the transmitting/receiving antenna 52 via the output port ANT based on the switching signal SUB1 or to the antenna switching section 64 via the output port EXT.

The antenna switching section 64 is a selector switch for selecting a transmitting antenna for outputting a send signal from the output port ANT of the signal transmitter 62 based on the switching signals SUB1, SUB2 from the logic circuit 60.

The external output terminal 66 is an output terminal for connecting an output signal from the output port EXT to external apparatus (not shown) via the antenna switching section 64.

This is the end of the explanation on the configuration of the portable radio apparatus 50.

Next, operation of the portable radio apparatus 50 of the aforementioned configuration will be described referring to Fig. 4. Fig. 4 is a timing chart of portable radio apparatus.

The uppermost slot in the timing chart chronologically shows the timing of a transmitting/receiving antenna slot of a time division multiple access system.

Just before the receiving slot Rx is a determination period for the space diversity 56 to determine a receiving antenna. In this determination period, the receiving antenna determination result BRNC is output to the controller 58. In this embodiment, in case the determination result remains "L" in a receiving slot Rx from the end of the determination period to next determination period, the transmitting/receiving antenna 52 is selected as a receiving antenna. In case the determination result remains "H", the transmitting/receiving antenna 54 is selected as a receiving antenna.

The period from the receiving slot Rx to next transmitting slot Tx is an idle slot as a transmitting/receiving period irrelevant to channels of the portable radio apparatus 50.

In the transmitting slot Tx, the signal transmitter 62 is powered when the power on signal TxPo from the controller 58 goes "H".

At the same time, in case the determination result BRNC is "L", the controller 58 outputs a control signal so that the switching signal SUB1 from the logic circuit 60 will be driven "L" and the switching signal SUB2 will be driven "H". In case the determination result BRNC is "H", the controller 58 outputs a control signal to the logic circuit 60 so that the switching signal SUB1 from the logic circuit 60 will be driven "H" and the switching signal SUB2 will be driven "L".

The signal transmitter 62, in case the switching signal SUB1 from the logic circuit 60 is "L", outputs a send signal to the transmitting/receiving antenna 52 from the output port ANT. In case the switching signal SUB1 is "H", the signal transmitter 62 outputs a send signal from the output port EXT.

The antenna switching section 64, in case the switching signal SUB1 from the logic circuit 60 is "L" and the switching signal SUB2 is "H", selects an external output terminal 66 (solid line in the antenna switching section 64). In case the switching signal SUB1 from the logic circuit 60 is "H" and the switching signal SUB2 is "L", the antenna switching section 64 selects a transmitting/receiving antenna 54 as a transmitting antenna (dotted line in the antenna switching section 64).

Thus, in case the transmitting/receiving antenna 52 is selected as a transmitting antenna (switching signal SUB1 is "L"), a send signal is output from the output port ANT. In case the transmitting/receiving antenna 54 is selected as a transmitting antenna (switching signal SUB1 is "H"), a send signal is output from the output port EXT, and the antenna switching section 64 switches to the transmitting/receiving antenna 54.
operation of transmission antenna switching is described referring to the timing chart of Fig. 4.

In a receiving slot Rx1, the determination result BRNC of the space diversity 56 is "L" so that a transmitting/receiving antenna 52 is selected as a receiving antenna. When the idle slot is passed and a transmitting slot Tx1 is reached, the signal transmitter 62 is powered by way of a power on signal TxPo. In this practice, the switching signal SUB1 from the logic circuit 60 is "L" and the switching signal SUB2 is "H" so that the signal transmitter 62 outputs a send signal to the transmitting/receiving antenna 52 from the output port ANT. The antenna switching section 64 selects the external output terminal 66.

In the receiving slot Rx2, the determination result BRNC of the space diversity 56 is "H" so that a transmitting/receiving antenna 54 is selected as a receiving antenna. When the idle slot is passed and a transmitting slot Tx2 is reached, the signal transmitter 62 is powered by way of a power on signal TxPo. At the same time, the switching signal SUB1 from the logic circuit 60 goes "H" and the switching signal SUB2 goes "L". Thus the signal transmitter 62 outputs a send signal from the output port EXT and the antenna switching section 64 selects the transmitting/receiving antenna 54 as a transmitting antenna.

In the embodiment, a transmitting/receiving antenna selected as a receiving antenna by the space diversity 56 in a receiving slot is selected as a transmitting antenna in a transmitting slot.

It is highly possible that a transmitting/receiving antenna with good receiving quality has a good transmitting in transmission of next transmission slot. Such a transmitting/receiving antenna can keep a better transmitting quality.

There is no switching sections between the output port ANT and the transmitting/receiving antenna 52 so that a send signal output from output port ANT is not subject to a transmission loss caused by a contact.

### [Sixth embodiment]

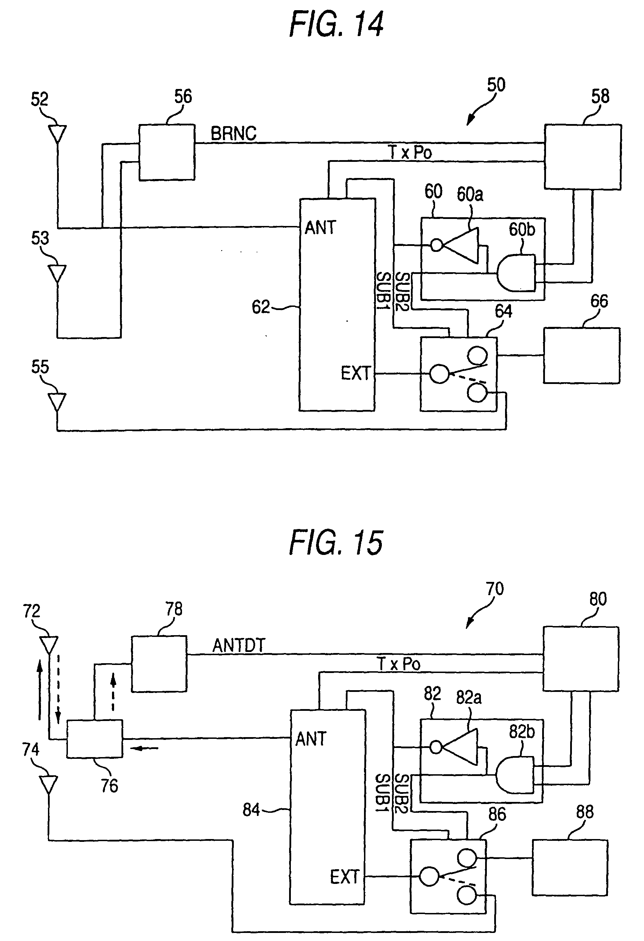

The sixth embodiment of the invention will be described referring to Fig. 14.

Fig. 14 is a block diagram of portable radio apparatus in the sixth embodiment.

The portable radio apparatus in this embodiment differs from the portable radio apparatus 50 in the first embodiment in that a receiving-only antenna 53 and a transmitting-only antenna 55 are included as antennas. Either the receiving-only antenna 53 and the transmitting/receiving antenna 52 is determined as a receiving antenna by the space diversity 56. Further, either the transmitting-only antenna 55 and the transmitting/receiving antenna 52 is selected as a transmitting antenna.

Features of the other units are the same as those of the portable radio apparatus 50 in the fifth embodiment. Features and operation of this embodiment will be described.

In a determination period for the space diversity 56 to determine a receiving antenna, the receiving antenna determination result BRNC is output to the controller 58. In this embodiment, in case the determination result BRNC remains "L" in a receiving slot Rx from the end of the determination period to next determination period, the transmitting/receiving antenna 52 is selected as a receiving antenna. In case the determination result BRNC remains "H", the receiving-only antenna 53 is selected as a receiving antenna.

In the transmitting slot Tx, the signal transmitter 62, in case the switching signal SUB1 from the logic circuit 60 is "L", outputs a send signal to the transmitting/receiving antenna 52 from the output port ANT. In case the switching signal SUB1 is "H", the signal transmitter 62 outputs a send signal from the output port EXT.

The antenna switching section 64, in case the switching signal SUB1 from the logic circuit 60 is "L" and the switching signal SUB2 is "H", selects an external output terminal 66 (solid line in the antenna switching section 64). In case the switching signal SUB1 from the logic circuit 60 is "H" and the switching signal SUB2 is "L", the antenna switching section 64 selects a transmitting-only antenna 55 (dotted line in the antenna switching section 64).
operation of transmission antenna switching is described referring to the timing chart of Fig. 4.

In a receiving slot Rx1, the determination result BRNC of the space diversity 56 is "L" so that a transmitting/receiving antenna 52 is selected as a receiving antenna. When the idle slot is passed and a transmitting slot Tx1 is reached, the signal transmitter 62 is powered by way of a power on signal TxPo. In this practice, the switching signal SUB1 from the logic circuit 60 is "L" and the switching signal SUB2 is "H" so that the signal transmitter 62 outputs a send signal to the transmitting/receiving antenna 52 from the output port ANT. The antenna switching section 64 selects the external output terminal 66.

In the receiving slot Rx2, the determination result BRNC of the space diversity 56 is "H" so that a receiving-only antenna 53 is selected as a receiving antenna. When the idle slot is passed and a transmitting slot Tx2 is reached, the signal transmitter 62 is powered by way of a power on signal TxPo. At the same time, the switching signal SUB1 from the logic circuit 60 goes "H" and the switching signal SUB2 goes "L". Thus the signal transmitter 62 outputs a send signal from the output port EXT and the antenna switching section 64 selects the transmitting-only antenna 55 as a transmitting antenna.

This, in case a transmitting/receiving antenna 52 is selected as a receiving antenna by the space diversity 56, the transmitting/receiving antenna 52 is also selected as a transmitting antenna. In case a receiving-only antenna 53 is selected as a receiving antenna by the space diversity 56, the transmitting-only antenna 55 corresponding to the receiving-only antenna 53 is selected as a transmitting antenna.

In this embodiment, it is possible to select as a transmitting antenna an antenna capable of transmission corresponding to an antenna selected as a receiving antenna by the space diversity 56 in the receiving slot.

There is no switching sections between the output port ANT and the transmitting/receiving antenna 52 so that a send signal output from output port ANT is not subject to a transmission loss caused by a contact.

### [Seventh embodiment]

Fig. 15 is a circuit block diagram of portable radio apparatus in the seventh embodiment.

The portable radio apparatus 70 of this embodiment comprises units including transmitting/receiving antennas 72, 74, a directional coupler 76, a reflected wave detector 78, a controller 80 and a logic circuit 82 as an antenna selector, a signal transmitter 84 and an antenna switching section 86 as a switching transmitter, and an external output terminal 88.

Each unit of the portable radio apparatus 70 will be detailed.

The transmitting/receiving antennas 72, 74 are transmitting/receiving antennas commonly available for transmission and reception. Both antennas are also connected to a receiver (not shown). An example of antenna arrangement of transmitting/receiving antennas 72, 74 in the portable radio apparatus 70 is the same as the transmitting/receiving antennas 12 and 14 in Figs. 2A and 2B referred to in the first embodiment. The shape and configuration of the transmitting/receiving antenna 74 are the same as those of the transmitting/receiving antenna 14 in Figs. 3A to 3E so that the corresponding description is omitted.

The directional coupler 76 can transmit to the transmitting/receiving antenna 32 with virtually no loss a send signal output from the signal transmitter 84 described later. The directional coupler 76 outputs the reflected wave of a send signal irradiated from the transmitting/receiving antenna 72 to the reflected wave detector 78 in the subsequent stage.

For example, assume a case where part of a human body for example the hand comes in contact with (or in close proximity of) the transmitting/receiving antenna 72. When the hand comes in contact with the transmitting/receiving antenna 72, the impedance of the transmitting/receiving antenna 72 varies thus preventing radiation of a send signal at a predetermined power, and a reflected wave of the send signal is returned from the transmitting/receiving antenna 72. Or, the power and amplitude of the reflected wave increases than when the hand is not in contact or not in close proximity.

The reflected wave (dotted line arrow in Fig. 15) is input to the directional coupler 76 in the opposite direction to the send signal (solid line arrow in Fig. 15) thus is output to the reflected wave detector 78 by the directional coupler 76.

The reflected wave detector 78, in case the detected voltage Vdet is greater than the reference voltage Vref, outputs the reflected wave detecting signal ANTDT as an "H" signal. In case the detected voltage Vdet is smaller than the reference voltage Vref, the reflected wave detector 78 outputs the reflected wave detecting signal ANTDT as an "L" signal. Configuration of the reflected wave detector 78 is the same as that of the reflected wave detector 38 of the third embodiment shown in Fig. 10, and the corresponding description is omitted.

The controller 80 outputs a control signal to a logic circuit 82 in the subsequent stage on input of the reflected wave detecting signal ANTDT output from the reflected wave detector 78.

The logic circuit 82, on input of a control signal from the controller 80, outputs switching signals SUB1, SUB2 for selecting a transmitting antenna to the antenna switching section 86. The inside of the logic circuit 82 comprises, for example, an inverter 82a and an AND circuit 82b. Another logic circuit may be used as long as it can output switching signals SUB1, SUB2, Or, a single switching signal output may be used to allow instruction on antenna switching to the antenna switching section 86.

The switching signal SUB 1 from the logic circuit 82 is also output to a signal transmitter 84 described later and switches output of a send signal between the output port ANT as a first output port and the output port EXT as a second output port.

The signal transmitter 84 is a unit for outputting a send signal per transmit slot based on a power on signal TxPo from the controller 80. The send signal is output to the transmitting/receiving antenna 72 via the output port ANT based on the switching signal SUB1 or to the antenna switching section 84 via the output port EXT.

The antenna switching section 86 is a selector switch for switching a send signal from the output port ANT of the signal transmitter 84 to the transmitting/receiving antenna 74 based on the switching signals SUB1, SUB2 from the logic circuit 82.

The external output terminal 88 is an output terminal for connecting an output signal from the output port EXT to external apparatus (not shown) via the antenna switching section 84.

This is the end of the explanation on the configuration of the portable radio apparatus 70.

Next, operation of the portable radio apparatus 70 of the aforementioned configuration will be described referring to Fig. 11. Fig. 11 is a timing chart of portable radio apparatus.

The uppermost slot in the timing chart chronologically shows the timing of a transmitting/receiving antenna slot of a time division multiple access system.

The period from the receiving slot Rx to next transmitting slot Tx is an idle slot as a transmitting/receiving period irrelevant to channels of the portable radio apparatus 70.

In the transmitting slot Tx, the signal transmitter 84 is powered when the power on signal TxPo from the controller 80 goes "H".

At the same time, in case the reflected wave detecting signal ANTDT is "L", the controller 80 outputs a control signal to the logic circuit 82 so that the switching signal SUB1 from the logic circuit 82 will be driven "L" and the switching signal SUB2 will be driven "H". In case the reflected wave detecting signal ANTDT is "H", the controller 58 outputs a control signal so that the switching signal SUB1 from the logic circuit 60 will be driven "H" and the switching signal SUB2 will be driven "L".

The signal transmitter 84, in case the switching signal SUB1 from the logic circuit 82 is "L", outputs a send signal to the transmitting/receiving antenna 72 from the output port ANT. In case the switching signal SUB1 is "H", the signal transmitter 84 outputs a send signal from the output port EXT.

The antenna switching section 86, in case the switching signal SUB1 from the logic circuit 82 is "L" and the switching signal SUB2 is "H", selects an external output terminal 88 (solid line in the antenna switching section 86). In case the switching signal SUB1 from the logic circuit 82 is "H" and the switching signal SUB2 is "L", the antenna switching section 86 selects a transmitting/receiving antenna 74 (dotted line in the antenna switching section 86).

Thus, in case the transmitting/receiving antenna 72 is selected as a transmitting antenna (switching signal SUB1 is "L"), a send signal is output from the output port ANT. In case the transmitting/receiving antenna 74 is selected as a transmitting antenna (switching signal SUB1 is "H"), a send signal is output from the output port EXT, and the antenna switching section 86 switches to the transmitting/receiving antenna 74.
operation of transmission antenna switching will be described referring to the timing chart of Fig. 11.

When the receiving slot Rx1 and the idle slot are passed and a transmitting slot Tx1 is reached, the signal transmitter 84 is powered by a power on signal TxPo and a send signal is output to the transmitting/receiving antenna 72 from the output port ANT. In this practice, the reflected wave detecting signal ANTDT of the reflected wave detector 78 is "L", that is, the detected voltage Vdet of the reflected wave on the transmitting/receiving antenna 72 is smaller than the reference voltage Vref, so that a control signal from the controller 80 drives the switching signal SUB1 from the logic circuit 82 "L" and the switching signal SUB2 "H". The antenna switching section 86 selects an external output terminal 88 and the transmitting/receiving antenna 72 is selected as a transmitting antenna.

In the receiving slot Rx2, the reflected wave detecting signal ANTDT goes "L". When the idle slot is passed and a transmitting slot Tx2 is reached, the signal transmitter 84 is powered by a power on signal TxPo and a send signal is output to the transmitting/receiving antenna 72 from the output port ANT. In this practice, the reflected wave detecting signal ANTDT of the reflected wave detector 78 is "H", that is, the detected voltage Vdet of the reflected wave on the transmitting/receiving antenna 72 is greater than the reference voltage Vref, so that a control signal from the controller 80 drives the switching signal SUB1 from the logic circuit 82 "H" and the switching signal SUB2 "L". The antenna switching section 86 selects a transmitting/receiving antenna 74 as a transmitting antenna.

In case the reflected wave on the transmitting/receiving antenna 72 is output to the reflected wave detector 78 by the directional coupler 76 and the voltage Vdet detected by the reflected wave detector 78 is smaller than the reference voltage Vref, the transmitting/receiving antenna 72 is selected as a transmitting antenna. In case the detected voltage Vdet is greater than the reference voltage Vref, the transmitting/receiving antenna 74 is selected as a transmitting antenna.

In this embodiment, in case the reflected wave is smaller than a predetermined value, the transmitting/receiving antenna 72 is selected as a transmitting antenna. In case the reflected wave is greater than a predetermined value, it is assumed that part of a human body, for example the hand of a user has come in contact with (or in close proximity of) the transmitting/receiving antenna 72, then the transmitting/receiving antenna 74 is selected as a transmitting antenna instead of the transmitting/receiving antenna 72. This allows use of an antenna with a higher antenna gain as a transmitting antenna.

There is no switching sections between the output port ANT and the transmitting/receiving antenna 72 so that a send signal output from output port ANT is not subject to a transmission loss caused by a contact.

In this embodiment, even after the transmitting/receiving antenna 74 is selected as a transmitting antenna, it is possible to output a send signal from the transmitting/receiving antenna 72 each time a transmitting slot starts and detect the level of the reflected wave on the transmitting/receiving antenna 72 then switch between transmitting antennas. By doing so, it is possible to switch between transmitting antennas by using the reflected wave on the transmitting/receiving antenna 72 as a switching reference.

While a directional coupler is connected to only the transmitting/receiving antenna 72 in this embodiment, It is possible to connect a directional coupler to the transmitting/receiving antenna 74 also (connect a reflected detector as well) and compare the outputs of reflected waves from both directional couplers with each other. Or, it is possible to compare each reflected wave with each reference voltage thus determining switchover of a transmitting antenna in a comprehensive way.

### [Eighth embodiment]

Fig. 16 is a block diagram showing the configuration of portable radio apparatus in the eighth embodiment.

The portable radio apparatus in the eighth embodiment differs from the portable radio apparatus 70 in the seventh embodiment in that a receiving-only antenna 73 capable of radio wave reception only and a transmitting-only antenna 75 capable of radio wave transmission only are included as antennas. The receiving-only antenna 73 is connected to a receiver circuit. Either the transmitting-only antenna 75 and the transmitting/receiving antenna 72 is selected as a transmitting antenna.

Features of the other units are the same as those of the portable radio apparatus 70 in the seventh embodiment. Features and operation of this embodiment will be described.

In the transmitting slot Tx, the signal transmitter 84, in case the switching signal SUB1 from the logic circuit 60 is "L", outputs a send signal to the transmitting/receiving antenna 72 from the output port ANT. In case the switching signal SUB1 is "H", the signal transmitter 84 outputs a send signal from the output port EXT.

The antenna switching section 86, in case the switching signal SUB1 from the logic circuit 82 is "L" and the switching signal SUB2 is "H", selects an external output terminal 66 (solid line in the antenna switching section 86). In case the switching signal SUB1 from the logic circuit 82 is "H" and the switching signal SUB2 is "L", the antenna switching section 86 selects a transmitting-only antenna 75 (dotted line in the antenna switching section 86).
operation of transmission antenna switching will be described referring to the timing chart of Fig. 11.

When the receiving slot Rx1 and the idle slot are passed and a transmitting slot Tx1 is reached, the signal transmitter 84 is powered by a power on signal TxPo and a send signal is output to the transmitting/receiving antenna 72 from the output port ANT. In this practice, the reflected wave detecting signal ANTDT of the reflected wave detector 78 is "L", that is, the detected voltage Vdet of the reflected wave on the transmitting/receiving antenna 72 is smaller than the reference voltage Vref, so that a control signal from the controller 80 drives the switching signal SUB1 from the logic circuit 82 "L" and the switching signal SUB2 "H". The antenna switching section 86 selects an external output terminal 88 and the transmitting/receiving antenna 72 is selected as a transmitting antenna.

In the receiving slot Rx2, the reflected wave detecting signal ANTDT goes "L". When the idle slot is passed and a transmitting slot Tx2 is reached, the signal transmitter 84 is powered by a power on signal TxPo and a send signal is output to the transmitting/receiving antenna 72 from the output port ANT. In this practice, the reflected wave detecting signal ANTDT of the reflected wave detector 78 is "H", that is, the detected voltage Vdet of the reflected wave on the transmitting/receiving antenna 72 is greater than the reference voltage Vref, so that a control signal from the controller 80 drives the switching signal SUB1 from the logic circuit 82 "H" and the switching signal SUB2 "L". The antenna switching section 86 selects a transmitting-only antenna 75 as a transmitting antenna.

In case the reflected wave on the transmitting/receiving antenna 72 is output to the reflected wave detector 78 by the directional coupler 76 and the voltage Vdet detected by the reflected wave detector 78 is smaller than the reference voltage Vref, the transmitting/receiving antenna 72 is selected as a transmitting antenna. In case the detected voltage Vdet is greater than the reference voltage Vref, a transmitting-only antenna 75 is selected as a transmitting antenna.

In this embodiment, in case the reflected wave is smaller than a predetermined value, the transmitting/receiving antenna 72 is selected as a transmitting antenna. In case the reflected wave is greater than a predetermined value, it is assumed that part of a human body, for example the hand of a user has come in contact with (or in close proximity of) the transmitting/receiving antenna 72, then the transmitting-only antenna 75 is selected as a transmitting antenna instead of the transmitting/receiving antenna 72. This allows use of an antenna with a higher antenna gain as a transmitting antenna.

There is no switching sections between the output port ANT and the transmitting/receiving antenna 72 so that a send signal output from output port ANT is not subject to a transmission loss caused by a contact.

While the invention has been described in details and referring to specific embodiments, those skilled in the art will understand that various modifications or changes may be made to the invention without departing from the spirit and scope of the invention.

This patent application is based on the Japanese patent application filed December 15, 2000 (Japanese Patent Application No. 382466/2000) which is herein incorporated as a reference.

### Industrial Applicability

According to this portable radio apparatus, it is possible to switch between transmitting antennas to output a send signal. Thus it is possible to keep a better transmitting quality than when only a single transmitting antenna is used.

Also, switching between transmitting antennas is possible on a per transmitting slot basis thus allowing faster switching between transmitting antennas.

## Claims

1. A portable radio apparatus for a time division multiple access system having a plurality of antennas, said apparatus comprises:
an antenna selector for selecting a transmitting antenna used for transmission from among said plurality of antennas on a per transmitting slot basis; and
a switching transmitter for switching between said transmitting antennas on a per transmitting slot basis and outputting a send signal to said transmitting antenna.

2. The portable radio apparatus according to Claim 1,
wherein said each antenna is a transmitting/receiving antenna capable of radio wave transmission/reception, and
wherein said antenna selector selects a receiving antenna determined by the space diversity at radio wave reception as said transmitting antenna.

3. The portable radio apparatus according to Claim 1,
wherein said antennas include a transmitting/receiving antenna capable of radio wave transmission/reception, a receiving-only antenna capable of radio wave reception only, and a transmitting-only antenna capable of radio wave transmission only, and
wherein said antenna selector selects another antenna corresponding to said receiving-only antenna capable of radio wave transmission as said transmitting antenna, in case the receiving antenna determined by the space diversity at radio wave reception is said receiving-only antenna.

4. The portable radio apparatus according to Claim 1,
wherein said each antenna is a transmitting/receiving antenna capable of radio wave transmission/reception, and
wherein said antenna selector detects the reflected wave of a send signal on at least one antenna of said plurality of antennas by using a directional coupler and selects an antenna as said transmitting antenna in accordance with the magnitude of said reflected wave detected.

5. The portable radio apparatus according to Claim 1,
wherein said antennas include a transmitting/receiving antenna capable of radio wave transmission/reception, a receiving-only antenna capable of radio wave reception only, and a transmitting-only antenna capable of radio wave transmission only, and wherein said antenna selector detects a reflected wave of a send signal on at least one antenna for transmitting of said plurality of antennas by using a directional coupler and selects an antenna as said transmitting antenna in accordance with the magnitude of said reflected wave detected.

6. The portable radio apparatus according to any one of Claims 1 through 5,
wherein said switching transmitter includes a signal transmitter and an antenna switching section,
wherein said signal transmitter outputs said send signal to said antenna switching section, and
wherein said antenna switching section switches said send signal from said signal transmitter to said transmitting antenna based on said selection result of said antenna selector.

7. The portable radio apparatus according to any one of Claims 1 through 5,
wherein said switching transmitter includes a signal transmitter and an antenna switching section,
wherein said signal transmitter includes a plurality of output ports for outputting said send signal, directly connects a first output port as said at least one output port out of said plurality of output ports to said antenna capable of radio wave transmission, and connects a second output port as said at least one output port out of said antenna switching section,
wherein, in case said selection result of said antenna selector is said antenna directly connected to said first output port, said signal transmitter outputs said send signal from said first output port, and
wherein, in case said selection result of said antenna selector is said antenna connectable to said second output port by alternating said antenna switching section, said signal transmitter outputs said send signal from said second output port and said antenna switching section switches to said transmit antenna selected by said antenna selector.

8. The portable radio apparatus according to any one of Claims 1 through 7,
wherein said plurality of antennas include a whip antenna as a transmitting/receiving antenna provided on said portable radio apparatus so that said whip antenna is capable of being accommodated in said portable radio apparatus and a monopole antenna as a transmitting/receiving antenna built into a housing of said portable radio apparatus.

9. A portable radio apparatus having a plurality of antennas, comprising:
an antenna selector for selecting a transmitting antenna used for transmission from among said plurality of antennas; and
a switching transmitter for switching between said transmitting antennas and outputting a send signal to said transmitting antenna based on the selection result of said antenna selector;
wherein said plurality of antennas include a whip antenna as a transmitting/receiving antenna provided on said portable radio apparatus so that said whip antenna is capable of being accommodated in said portable radio apparatus and a monopole antenna as a transmitting/receiving antenna built into a housing of said portable radio apparatus.

10. The portable radio apparatus according to Claim 8 or 9,
wherein said monopole antenna is in an approximate L shape having one knee and that said knee is located away from said whip antenna.

11. The portable radio apparatus according to any one of Claims 8 through 10, further comprising:
two housings which can be folded via a hinge;
wherein said whip antenna and said monopole antenna are provided in said housings separate from each other.
